Europäisches Patentamt

(19) European Patent Office

Office européen des brevets

(11) Publication number : 0 629 549 A2

# (12) EUROPEAN PATENT APPLICATION

(21) Application number : 94304081.6

(22) Date of filing : 07.06.94

(51) Int. Cl.[5] : B64D 45/02

(30) Priority : 09.06.93 US 74332

(43) Date of publication of application :
21.12.94 Bulletin 94/51

(84) Designated Contracting States :
DE FR GB

(71) Applicant : INCO LIMITED
Royal Trust Tower
Toronto-Dominion Centre
Toronto Ontario, M5K 1N4 (CA)

(72) Inventor : Bell, James Alexander Ervert
3217 Shoreline Drive
Oakville, Ontario L6L 5Y9 (CA)
Inventor : Hansen, George Clayton
360 South 250 West
Midway, Utah 84049 (US)
Inventor : Larsen, Charles Bennett
332 South 830 East
Smithfield, Utah 84335 (US)
Inventor : Widauf, David Paul
1665 North 1779 East
Logan, Utah 84321 (US)

(74) Representative : Hedley, Nicholas James
Matthew
Stephenson Harwood
One, St. Paul's Churchyard
London EC4M 8SH (GB)

(54) Composition for lightning strike protection and improved electrical conductivity.

(57) A composite structure having enhanced light-ning strike protection. The high performance composite substrate is coated with electrically conductive nickel coated fibers embedded in a protective paint. By virtue of the nickel coated fibers in paper or shredded form, the paint is electrically conductive.

FIG. 1

## TECHNICAL FIELD

The instant invention relates to lightning strike protection in general and, more particularly, to an electrically conductive composition for protecting aircraft and aerospace components from the catastrophic effects caused by lightning strikes.

## BACKGROUND ART

The use of carbon fiber composites in aircraft and aerospace components is expanding because of the very favorable strength to weight ratio compared to aluminum, i.e., approximately .75 to .18 Gpa/density. With bare aluminum structures lightning strike has not been a major problem. However, when aluminum is painted the lightning strike tends to concentrate at one point and some metallurgical damage to the metal occurs. Visually, this damage is such that if it is repainted it is not noticeable. However, as relatively non-conductive carbon, boron, glass, and aramid fiber composites have been introduced with greater frequency for aircraft applications, major problems have arisen with regard to lightning.

In order to seal the composite from debilitating moisture absorption, the composite structures are generally painted with a polyurethane base aircraft grade paint. Unfortunately, when painted composite materials are struck by lightning the effect is catastrophic. Usually a hole about 15 cm-square is blown through the composite panel. The size of the hole depends, of course, on the thickness and construction of the panel.

In order to overcome this severe damage all at risk composite parts are protected against lightning strike. Currently this is accomplished by placing a copper or aluminum mesh on top of the fiber epoxy composite, adding extra epoxy and co-curing the composite in the normal way. Alternatively, the metallic mesh is adhesively bonded to the previously cured epoxy fiber structure and a fill-in layer of epoxy plus a surface layer of epoxy is painted on top of the mesh and cured.

Aluminum forms a severe corrosion couple with the carbon fiber and several layers of glass fiber are usually placed on top of the carbon fiber. However, this leads to a severe weight penalty of over 700 g/m² so this system is rarely used.

The copper mesh materials must be well bonded to the epoxy-fiber base because the coefficient of thermal expansion of copper is 19 parts per million per degree Celsius compared to about 1 part per million per degree Celsius for epoxy composites. If not properly bonded this difference in expansion coefficients causes microcracking of the surface of the epoxy, and corrosion of the copper mesh will ensue. The copper meshes usually have a multiplicity of holes in them to lower the add on weight and to allow bonding through the holes. The copper mesh provides a good degree of conductivity to the structure. However, when a painted epoxy fiber structure with copper mesh lightning strike protection is struck by a zone 1A simulated lightning strike some damage (2x50 cm) to the upper plies of the composite still occurs.

A newer method of lightning strike protection is to coat the carbon or aramid fibers with nickel, weave them into a cloth and use the cloth as the upper layer of the composite. Since the carbon remains unaffected by the nickel coating it retains its structural load bearing properties in the composite. The only weight penalty is the weight of the nickel itself as shown in Table 1. The nickel adds 200 g/m² to the woven structure. Table 1 provides a comparison between the various strike protection systems. (The last two columns encompass the instant invention.) The nickel is electrochemically compatible with the carbon and does not have visible corrosion products. Normal resins and curing cycles used with carbon fibers can also be used with the nickel coated carbon fiber. A wide variety of structural composites are possible as will be further disclosed in this application. The nickel imparts adequate conductivity to structure and gives about the same degree of damage after lightning strike as the metallic mesh based substrates.

EP 0 629 549 A2

## TABLE 1

| | Cu Mesh | Al Mesh | Cloth 50w % Ni* | Coated Unidirectional Fiber 50% Ni* | Paper 84% Ni* |
|---|---|---|---|---|---|
| **Weight Penalty** | | | | | |
| g/m² Metal | 150 | 211 | 200 | 96 | 50 |
| Epoxy | 1.76 | 416 | 0 | 0 | 0 |
| Paint | .76 | 76 | 76 | 76 | 138 |
| Total | 402 | 703 | 276 | 172 | 198 |
| **Resistance** Ω/sq | .008 | .00035 | .0084 | .006 | .058 |

**\*In weight percent**

The instant invention, however, relates to an alternative lightning strike protection. A basic problem with lightning strike is the non-conductive nature of the polyurethane paint. A normal carbon fiber composite, provided it is thick enough, without paint, will survive a lightning strike with acceptable damage since the carbon fiber composite is somewhat conductive. However, as mentioned earlier, it will suffer from moisture pick-up if it is unpainted. While providing environmental protection the paint is a good dielectric and concentrates the strike into a single point which suffers severe damage. Various conductive paints have been tried but none to date have proved practical or economical.

## SUMMARY OF THE INVENTION

Accordingly, there is provided a method for making conductive paint that will reduce damage to the composite substrate when struck by lightning.

The invention consists of incorporating a thin veil of nickel coated carbon (or Kevlar® aramid fiber) paper in a paint carrier that acts to dramatically reduce the lightning strike damage. The nickel on the carbon in the paint forms many conductive paths from the substrate to the surface of the paint and laterally throughout the paint. This plurality of conductive paths tends to spread out the strike damage. Furthermore most of the damage is confined to the paint rather than the underlying structural composite. The paint is easily repairable.

## BRIEF DESCRIPTION OF THE DRAWINGS

Figure 1 compares the electrical resistance of various nickel containing paints and the instant invention.

Figure 2 compares the natural log of the electrical resistance of various nickel containing paints and the instant invention.

## PREFERRED MODE FOR CARRYING OUT THE INVENTION

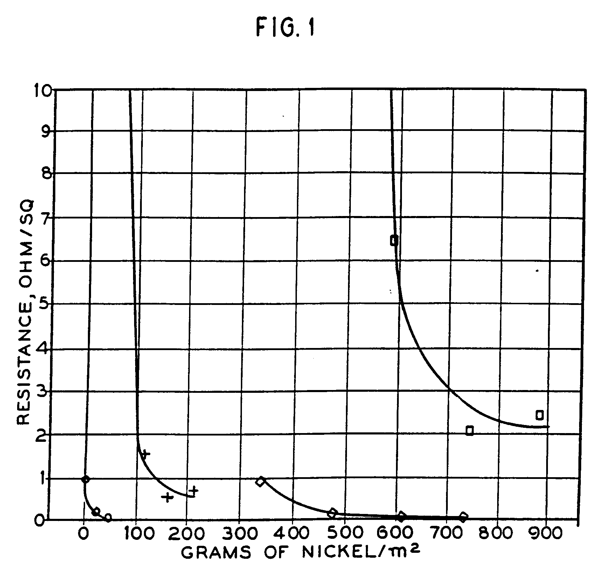

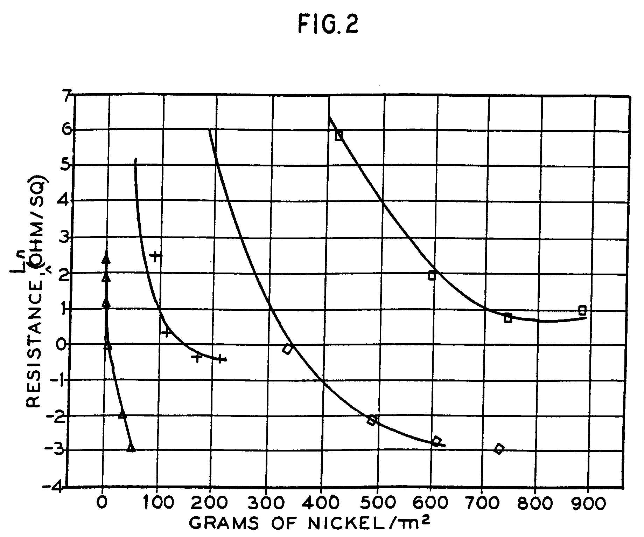

For many years attempts to incorporate metallic particles into paint to make the paint more conductive have been made. For the application of lightning strike protection a non-corrosive metal is desired. Since both copper and aluminum powders corrode or oxidize, nickel is the best alternative. The electrical resistances of various nickel powders in an acrylic paint are shown in Figures 1 and 2. The electrical resistance of the paint, expressed in ohms/square, is measured on a paint prepared by mixing with X-Coat 210 Premix™ from E/M Corporation, drawing the paint to a wet thickness of .38 mm and allowing it to set over night. The X-Coat 210 Premix is a mixture of methyl ethyl ketone, acetate and methacrylate. The resistance in ohms/square is shown in Figure 1, and the natural log of the resistance is shown in Figure 2, as a function of the weight of nickel per

3

meter squared. The metallic powders used to produce the paints in Figures 1 and 2 are available from INCO Specialty Powder Products Corporation, Saddle Brook, New Jersey, and may be used as paint additives. Nickel powder 255 (designated +) is a filamentary nickel powder having a branched filament about 2.5 micrometers in diameter. 4 SP powder (designated □) is a spherical nickel powder 8 to 10 micrometers in diameter. Ag/4 SP (designated ◊) is 4 SP powder coated with 15 wt% silver. Δ and ° represent the instant invention using nickel coated carbon paper.

The instant invention was made by coating a non-woven carbon paper weighing 9.5 g/m² with various weights of nickel by passing the heated paper through a reactor containing nickel carbonyl gas. Nickel coated products made by this process are described in a paper entitled "Properties of Nickel Coated Carbon and Kevlar Fibres Produced by Decomposition of Nickel Carbonyl" by J.A.E. Bell and G.C. Hansen, presented at the 23rd International SAMPE Technical Conference in October 1991. For the purposes of this invention it is easier to measure the electrical resistance in ohms/square on the nickel coated paper material prior to embedding the paper in the paint. Note that the dried thickness of the paint samples and the nickel coated paper embedded in the paint are about the same thickness at .279 mm. The commercially available carbon paper is manufactured by conventional means known to those skilled in the art. It is available from Technical Fiber Products Ltd. of Slatehill, N.Y., International Paper Co. of Purchase, N.Y. and others.

The results clearly show that the most conductive paints per unit weight may be made by embedding a layer of nickel coated carbon paper in the paint.

The usefulness of this method of making a conductive paper paint on top of composite aircraft parts in preventing damage from lightning strike is demonstrated in the following tests. A series of panels 60 cm x 60 cm of differing constructions and paint configurations were prepared as shown in Table 2 and subjected to zone 1A and zone 2A simulated lightning strikes at Lightning Technologies, Pittsfield, Massachusetts.

## TABLE 2

### STRUCTURE AND DAMAGE AFTER 200,000 AMP SIMULATED LIGHTNING STRIKE

| Sample No. | Substate Plies | Top Ply | Paint | Top Damage | Bottom Damage |
|---|---|---|---|---|---|
| **Carbon Fiber (Unidirectional -"Uni")** | | | | | |
| A | Uni+45/-45/0 | 50% Ni | Yes | Resin loss 15cmx15cm Delamination 15x20cm | Puncture Delamination 10x15cm |
| B | Same as A | 50%Ni | No | Some resin discoloration | No visible damage |
| C | Same as A | 50%Ni | Yes+ conductive paper | Some resin burn Upper ply tuffed 3x7 cm | No visible damage |
| D | Same as A | 0%Ni | Yes | Delamination 25x101cm | Puncture Delamination, 20x30cm |
| E | Same as A | 0%Ni | No | Resin loss Delamination 5x7cm | Puncture, Plies torn away |
| F | Same as A | 0%Ni | Yes+ conductive paper | Resin burn 17x17cm Delamination 5x7cm | Puncture, Plies torn away |
| **Carbon Fiber (Woven)** | | | | | |
| G | 8 plies 90° weave | 90° weave 50%Ni | No | Resin discoloration 10x15cm | No damage |
| H | Same as G | 50%Ni | Yes | Resin loss 9x7 Delamination 2.5cm | No damage |
| I | Same as G | 50%Ni | Yes+ conductive paper | No resin loss | No damage |
| J | Same as G | 0%Ni | Yes+ conductive paper | Some resin loss Delamination 2.5cm | No damage |

| Sample No. | Substate Plies | Top Ply | Paint | Top Damage | Bottom Damage |
|---|---|---|---|---|---|
| Kevlar Fiber (Woven) | | | | | |
| K | 7 plies 90° weave +or - 45 | 50% Ni | Yes+ conductive paper | Paper burned Outer ply burned | No damage |
| L | Same as K | 0% Ni | Yes+ conductive paper | Paper only burned off entire surface | Some stress cracking |

Three different types of construction of the sample panels were prepared.

The first set was made using Hercules™ 3502 resin system to make unidirectional (Uni) prepreg using Hercules AS4-C grade carbon fiber. All of the panels made from the unidirectional prepreg were constructed in the same manner using 5 regular black plies of unidirectional tape with a top layer of either unidirectional uncoated carbon fiber prepreg or the same prepreg made using 50 wt% nickel coated Hercules AS4-C grade fiber made into unidirectional prepreg. Various composite panels were then painted with conventional aircraft grade polyurethane paint; some were left unpainted; and some were coated with the nickel coated conductive paper in the paint.

The second series of tests was undertaken on panels made from woven cloth made from 3K AS4 grade Hercules carbon fiber woven in a 12 tow/in 90° weave pattern, yielding 200 g/m² carbon fiber. Eight plies were laid up using Hercules 3802 resin system. The upper layer was the same 90° weave black cloth except that some of it was woven from 3K Hercules AS4 fiber coated with 50 wt% nickel. The surface was again either painted with conventional urethane paint, unpainted or coated with the conductive paper embedded in the paint.

The third set of tests involved panels made entirely of woven Kevlar cloth (1620 denier) as opposed to carbon fiber cloth. In one case the top layer was Kevlar cloth woven from Kevlar tows coated with 50 wt% nickel. The surface in both cases was coated with the nickel coated carbon paper embedded in the urethane paint.

All of the above panels before painting were bagged and autoclaved following the manufacturers' recommended procedure for the resin systems.

After curing, all of the panels were either painted with PPG™ DP401 and DP48 epoxy primer, then painted with Deltron™ DAV882 and DAV2 paint; left unpainted; or coated with the nickel carbon paper conductive paint according to the following procedures:

1. Sanded cured panel with 100 grit silicon carbide paper.
2. Wipe with acetone and wipe dry.
3. Apply full coat of epoxy primer PPG DP401 and DP48.
4. Embed nickel coated carbon paper into the wet primer.
5. Let dry for 24 hours.
6. Sand lightly with 300 grit silicon carbide paper.
7. Apply first coat of polyurethane enamel Deltron DAV82 and DAV2.
8. Wet sand with 300 grit silicon carbide paper.
9. Apply final coat of polyurethane enamel to .04mm thickness and allow to dry.

The simulated lightning strike tests were conducted by Lightning Technologies. Only the results of the zone 1A tests are described herein.

For the damage tests, the panels were positioned under an insulated tip electrode, spaced 2.54 cm from the surface of the panel. An AWG™ #30 copper starting wire was used in the gap to direct the strike to a desired spot. The panels were supported by the aluminum bars clamped to the edges to collect the injected current. In addition, the panels were supported by wooden 5.1 x 10.1cm boards positioned at right angles to the bars and spaced approximately 1/4 of the length of the panel from each end.

Applied currents were monitored by a pulse current transformer and resistive shunts. The voltage signals from the sensors were displayed and recorded on a digital storage oscilloscope (DSO).

Tests were conducted in accordance with the requirements of SAE Committee AE4L report, "Lightning Test Waveforms and Techniques for Aerospace Vehicles and Hardware," June 1978, para. 4.1.2, Lightning Strike Zones 1A and 2A. These requirements are essentially identical to Mil-Std-1757A, and FAA AC 20-53B.

DC resistance measurements were made to assist the selection of generator circuit components. The measurements were made using a Kelvin type bridge with needle point probes. The probes were pressed into the composite at the edges near the center of the panel. The impulse resistance measurements were made by drilling a small hole and installing a sheet metal screw into the composite panel. The holes were placed on the center line of the panel and separated by 40.6 cm. Currents from a high current generator, configured to supply a 3x70 μs(txtu) wave form were injected at the edges of the panel through aluminum bars clamped to the panel. Voltage on the panel was monitored at the screws with the leads routed as close to the center of the panel as possible to minimize the inductive voltage included in the result.

A review of the test data indicates the following:

**1) Panels From Unidirectional Carbon Prepreg:**

The only two panels which were able to survive the zone 1A lightning strike were the unpainted panel with a top layer of 50% Ni and the panel with a top layer of 50% Ni and the new conductive paper paint surface. Note that these panels are relatively thin and easily damaged by lightning strike.

### 2) Panels From Woven Carbon Cloth:

These thicker panels generally survived the lightning strike. The new conductive paper paint surface had the least damage and in combination with the top surface of 50% nickel cloth gave an easily repairable surface, i.e., only the conductive paper and the paint would have to be replaced. In these heavier panels, the new conductive paint by itself will give adequate protection, although some repair is required.

### 3) Panels From Woven Kevlar:

Neither panel was punctured which shows the value of the new conductive nickel carbon paper paint. When a nickel coated Kevlar is used for the top surface coat too high a temperature is reached and the Kevlar is melted. The small amount of damage with only the conductive paper on the surface was surprisingly good.

As will be recognized by those skilled in the art, other methods of applying the conductive paint are possible and are considered part of the purview of this application. For instance, a mixture of chopped nickel coated carbon fiber with a diluted thinner may be sprayed on the composite structure, then oversprayed with the paint and sanded.

Note that the last overcoat of paint need not be applied because the nickel itself will survive a salt spray test without visible corrosion products.

Glass, boron and other reinforcing fibers may be used for the composite panels.

It will be further appreciated that the instant invention is useful for other applications, such as electromagnetic induction ("EMI") shielding of parts and other situations where conductive paints are required.

While in accordance with the provisions of the statute, there is illustrated and described herein specific embodiments of the invention, those skilled in the art will understand that changes may be made in the form of the invention covered by the claims and that certain features of the invention may sometimes be used to advantage without a corresponding use of the other features.

### Claims

1. A method for affording lightning strike protection to a composite multiply structure by enhancing its electrical conductivity, the method comprising:
   a) placing a non-woven nickel coated fibrous layer over the structure, and
   b) depositing a coating over the fibrous layer.

2. The method according to claim 1 including placing a nickel coated paper over the structure, which paper is preferably selected from the group consisting of carbon, aramid, glass and boron fibres.

3. The method according to claim 1 or claim 2, wherein the structure includes an upper ply of nickel coated fibres.

4. The method according to any one of claims 1 to 3, including applying urethane over the fibrous layer.

5. A structure exhibiting enhanced electrical conductivity, the structure comprising a composite substrate, a paint deposited upon the substrate, a non-woven layer of nickel coated fibres embedded in the paint, and the nickel coated fibres in electrical contact with the substrate.

6. The structure according to claim 5 wherein the nickel coated fibres comprise a paper embedded in the paint, which paper is preferably made from nickel coated fibres selected from the group consisting of glass, boron, carbon and aramid.

7. The structure according to claim 5 wherein a ply of the composite communicates with the layer including nickel coated fibres.

8. The structure according to any one of claims 5 to 7 included in an aerospace vehicle.

9. The structure according to any one of claims 5 to 8, wherein the layer is a carbon paper.

10. The structure according to any one of claims 5 to 9, wherein the substrate is selected from the group consisting of unidirectional carbon prepreg, woven carbon cloth and woven aramid fibre cloth.

11. The structure according to claim 5 wherein a coating is disposed over the paper, which coating is preferably polyurethane.

12. A conductive paint comprising a carrier and non-woven nickel coated fibres therein.

13. The conductive paint according to claim 12 wherein the nickel coated fibres are selected from the group consisting of carbon, glass, boron and aramid.

14. The conductive paint according to claim 12 wherein nickel coated fibre paper is disposed within the paint.

FIG. 1

# FIG. 2